## Europäisches Patentamt
## European Patent Office
## Office européen des brevets

(19)

(11) Veröffentlichungsnummer: **0 166 156**
**B1**

(12)
# EUROPÄISCHE PATENTSCHRIFT

(45) Veröffentlichungstag der Patentschrift:
**12.08.87**

(21) Anmeldenummer: **85105883.4**

(22) Anmeldetag: **13.05.85**

(51) Int. Cl.⁴: **B 60 T 13/74**

(54) **Elektromechanische Betätigungseinrichtung für eine Scheibenbremse von Fahrzeugen, insbesondere Schienenfahrzeugen.**

(30) Priorität: **26.06.84 DE 3423509**

(43) Veröffentlichungstag der Anmeldung:
**02.01.86 Patentblatt 86/1**

(45) Bekanntmachung des Hinweises auf die Patenterteilung:
**12.08.87 Patentblatt 87/33**

(84) Benannte Vertragsstaaten:
**CH DE FR GB LI SE**

(56) Entgegenhaltungen:
**EP-A-0 072 404**
**DE-A-2 710 585**
**DE-B-1 186 492**
**DE-B-1 286 063**
**DE-U-7 520 484**
**FR-A-990 810**
**FR-A-1 266 366**
**FR-A-2 288 248**
**FR-A-2 496 804**
**US-A-1 774 831**

(73) Patentinhaber: **KNORR- BREMSE AG, Moosacher Strasse 80 Postfach 401060, D-8000 München 40 (DE)**

(72) Erfinder: **Bartlechner, Manfred, Am Katzenstein 1, D-8031 Wessling (DE)**
Erfinder: **Hefter, Erik, Dr., Richard- Strauss- Strasse 2a, D-8031 Eichenau (DE)**
Erfinder: **Kerscher, Albert, Frühlingstrasse 39, D-8057 Eching (DE)**
Erfinder: **Persson, Erling Roland, Konsertvägen 7, S-24500 Staffanstorp (SE)**

EP 0 166 156 B1

LIBER, STOCKHOLM 1987

**Beschreibung**

Die Erfindung betrifft eine elektromechanische Betätigungseinrichtung für eine Scheibenbremse von Fahrzeugen, insbesondere Schienenfahrzeugen, mit einem die Zuspannkraft abgebenden Federspeicher, dessen längsverschieblich geführtes Betätigungsglied vermittels eines über einen Elektromotor verstellbaren, nichtselbsthemmenden Kurvengetriebes in Spannrichtung des Federspeichers bewegbar und in einstellbaren Sollagen haltbar ist, wobei zwischen den Elektromotor und das Kurvengetriebe ein Cycloiden- oder Planetengetriebe eingeordnet ist.

Eine diesen Merkmalen entsprechende Betätigungseinrichtung ist aus der DE-A- 27 10 585 bekannt. Gemäß dieser Schrift treibt der Elektromotor über ein als Planetengetriebe ausgebildetes Untersetzungsgetriebe ein als Nockengetriebe ausgebildetes Kurvengetriebe an, dessen Nocken einen zu den vorstehend genannten Baugruppen mit senkrechter Achsrichtung angeordneten Federspeicher zu spannen und in den jeweiligen Spannstellungen zu halten vermag. Das Betätigungsglied ist hierbei gleichachsig zum Federspeicher, also ebenfalls mit senkrechter Achsrichtung zum Elektromotor und zum Untersetzungsgetriebe angeordnet. Zusätzlich können Gestängesteller und/oder Notlöseeinrichtungen unterschiedlicher Bauart vorgesehen werden. Bei dieser Betätigungseinrichtung sind zwar die einzelnen Baugruppen gut voneinander getrennt, doch kann der beschränkte Einbauraum, insbesondere bei Schienenfahrzeugen, den Einbau erschweren.

Für ähnliche Betätigungseinrichtungen ist es bekannt (DE-A- 25 46 402, DE-A- 25 46 470), daß die Welle des Elektromotors ein Ritzel trägt, welches über ein übliches, eine Zwischenwelle mit Zwischenrädern aufweisendes Zahnrad-Untersetzungsgetriebe ein drehbares Teil eines Gewindespindeltriebes anzutreiben bzw. in seiner jeweiligen Drehstellung zu halten vermag. Ein wesentlicher Mangel dieser Betätigungseinrichtungen besteht darin, daß zu Notbremsungen die Erregung des Elektromotors völlig abgeschaltet wird und der Federspeicher über das nunmehr als Übersetzungsgetriebe wirkende Zahnradgetriebe den Läufer des Elektromotors stark beschleunigen muß, wodurch der Anlegevorgang verzögert wird. Bei Beendigen des Einbremsvorganges müssen alle Teile der Betätigungseinrichtung rasch zum Stillstand gebracht werden, das heißt, die im Läufer des Elektromotors gespeicherte Energie muß über das Zahnradgetriebe rasch abgeführt werden, was zu Überbeanspruchungen der Betätigungseinrichtung und/oder Überbremsungen führen kann. Der Gewindespindeltrieb befindet sich bei diesen bekannten Betätigungseinrichtungen in einer axialen Ausnehmung des Federspeichers und ist mit einem anschließenden Gestängesteller kombiniert, wodurch sich ein vielteiliger, komplizierter Aufbau ergibt. Das Zahnradgetriebe befindet sich am der Kraftabgabestelle des Betätigungsgliedes entgegengesetzten Ende der Betätigungseinrichtung, dieses Ende wird von einem dem Notlösen bei Stromausfall dienenden Handantrieb für die Welle des Elektromotors überragt. Die Anordnung des Elektromotors mit seinem Handantrieb ist oftmals beim Einbau der Betätigungseinrichtung störend, da bei vielen Fahrzeugen, insbesondere Schienenfahrzeugen, ein der hierdurch gegebenen Raumform der bekannten Betätigungseinrichtungen nicht entsprechender Einbauraum zur Verfügung steht. Durch den ineinander übergreifenden Zusammenbau der einzelnen Baugruppen der bekannten Betätigungseinrichtung wird ein Ändern bzw. Austausch einzelner Betätigungsgruppen, wie es beispielweise zum Anpassen an bestimmte Fahrzeug- bzw. Bremsbedingungen erforderlich sein kann, wesentlich erschwert. Im Betrieb sind die bekannten Betätigungseinrichtungen energieaufwendig, da der Elektromotor durch entsprechende, wenn auch herabgesetzte Erregung die jeweilige Spannstellung des Federspeichers halten muß. Durch die endseitige Anordnung des Zahnradgetriebes ergibt sich bei den bekannten Betätigungseinrichtungen weiterhin der Mangel, daß keine zusätzlichen Baugruppen, welche beispielsweise eine mechanische Betätigungskraftbegrenzung in Abhängigkeit von der Fahrzeuglast bewirken können, anflanschbar sind.

Bei einer von den eingangs genannten Merkmalen abweichenden, elektromechanischen Betätigungseinrichtung nach der FR-A-12 66 366 für eine Trommelbremse vermag ein Elektromotor über ein selbsthemmendes Schneckengetriebe und eine elektrisch schaltbare Kupplugnseinrichtung ein Nockengetriebe in Löserichtung der von einer Feder in Zuspannrichtung belasteten Trommelbremse anzutreiben. Während Lösevorgängen sind zum Bewirken der Lösebewegungen der Elektromotor und die hierbei geschlossene Kupplungseinrichtung erregt. Zum Einbremsen, insbesondere auch bei Notbremsungen, wird die Kupplungseinrichtung entregt, wodurch sie sich öffnet und die Trommelbremse sich unter ihrer Federbelastung zuspannt; der Elektromotor verbleibt hierbei in Ruhe.

Bei einer andersartigen, elektromechanischen Betätigungseinrichtung nach dem DE-U-25 20 489 ist es bekannt, die Welle des Elektromotors durch eine elektrisch schaltbare Bremse abbremsbar zu gestalten. Hierdurch wird erreicht, daß das drehbare Glied des Gewindespindeltriebes ohne Erregung des Elektromotors allein durch nur wenig Energie benötigendes Schließen der elektrischen Bremse in seiner jeweiligen Stellung verriegelbar ist, so daß das Halten des Federspeichers in seiner jeweiligen Spannstellung nur wenig Energie erfordert.

Zudem ist der Federspeicher hierbei in konzentrisch um eine Zentralachse angeordnete Einzelfedern aufgelöst ausgebildet.

Aus der DE-B B 422 II/20f ist es weiterhin bekannt, bei elektromechanischen Betätigungseinrichtungen in das Betätigungsglied zwischen dem Federspeicher und der Kraftabgabestelle des Betätigungsgliedes ein vorgespanntes Federglied einzuordnen, welches eine bestimmte Elastizität der zuzuspannenden Bremse, beispielsweise der Bremszange, sicherstellt.

Insgesamt ist festzustellen, daß bei allen bekannten, elektromechanischen Betätigungseinrichtungen bei Notbremsungen oder Stromausfall der Federspeicher den Elektromotor über das Kurvengetriebe stark beschleunigen muß, wodurch, wie bereits erwähnt, der Einbremsvorgang verzögert wird. Zudem weist keine der Betätigungseinrichtungen die Möglichkeit auf, bei Bedarf Zusatzbauteile, wie beispielsweise die bereits erwähnte, fahrzeuglastabhängige Betätigungskraftbegrenzung anflanschen zu können.

Der Erfindung liegt die Aufgabe zugrunde, eine elektromechanische Betätigungseinrichtung der eingangs genannten Art derart auszubilden, daß bei Entregen des Elektromotors, wie es zu Notbremsungen und bei Stromausfall erfolgt, ein sehr rasches, durch unnötiges Beschleunigen hierzu nicht benötigter Teile nicht behindertes Einbremsen erfolgen kann. Weiterhin soll bei Bedarf sicherstellbar sein, daß zu Ende des Notbrems- Einbremsvorganges keine Überbremsungen und keine Überlastungen der Betätigungseinrichtung auftreten. Schließlich soll die Betätigungseinrichtung bei einfachem Aufbau bei Bedarf gut in einzelne Baugruppen gliederbar und insbesondere bei Nutzung in Schienenfahrzeugen gut dem zur Verfügung stehenden Einbauraum anpaßbar sein. Weiterhin soll die Betätigungseinrichtung die Möglichkeit bieten, bei Bedarf Zusatzbaugruppen anbauen zu können.

Diese Aufgabe wird nach der Erfindung dadurch gelöst, daß als zwischen dem Elektromotor und dem Kurvengetriebe wirksame, bei Notbetätigung der Betätigungseinrichtung öffnende und die Drehmomentübertragung zwischen Elektromotor und Kurvengetriebe unterbrechende Kupplungseinrichtung eine bei elektrischer Erregung schließende, gegebenenfalls mechanische Servowirkung aufweisende Bremse zum Festbremsen eines drehbar gelagerten Gehäuses des Cycloiden- oder Planetengetriebes vorgesehen ist. Durch die Kupplungseinrichtung wird erreicht, daß bei Freigabe der Entspannung des Federspeichers, wie es zu Notbremsungen erfolgt, das Kurvengetriebe vom Elektromotor abgekoppelt wird und der Federspeicher somit den Läufer des Elektromotors nicht beschleunigen muß; die ganze Kraft des Federspeichers steht damit zum raschen Einbremsen zur Verfügung.

Den Unteransprüchen sind nach der weiteren Erfindung vorteilhafte Ausgestaltungsmöglichkeiten für die elektromechanische Betätigungseinrichtung entnehmbar.

In der Zeichnung ist ein Ausführungsbeispiel einer nach der Erfindung ausgebildeten, elektromechanischen Betätigungseinrichtung dargestellt, und zwar zeigt

Figur 1 eine schematische Außenansicht der Betätigungseinrichtung unter Einbezug eines Fahrzeugbegrenzungs-Profiles in Seitenansicht, Stirnansicht und Aufsicht, wobei die einzelnen Baugruppen besonders betont sind, und

Figur 2 die Betätigungseinrichtung teilweise aufgeschnitten in Seitenansicht in vergrößertem Maßstab.

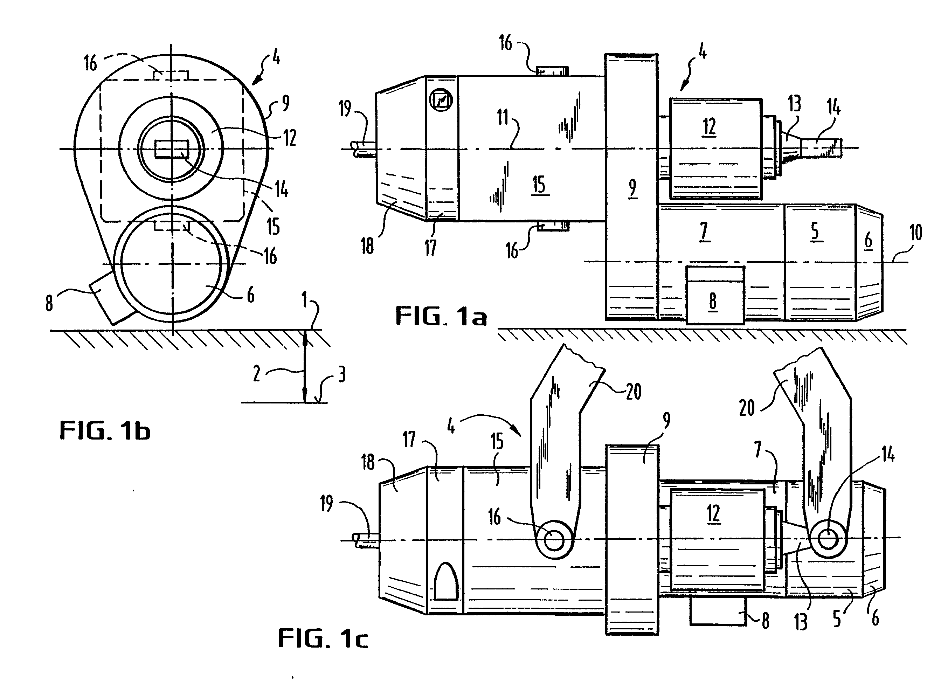

In Fig.1 ist eine Fahrzeug- Begrenzungsprofillinie 1 für ein Schienenfahrzeug dargestellt, welche sich in einem einen Freiraum sicherstellenden Abstand 2 über einer Schienenoberkante 3 befindet. Wie aus der Seiten- und Stirnansicht der Figur 1 ersichtlich, befindet sich die gesamte, elektromechanische Betätigungseinrichtung 4 oberhalb der Fahrzeug-Begrenzungsprofillinie 1 und greift damit nicht in den Freiraum zur Schienenoberkante 3 ein.

Die Betätigungseinrichtung 4 ist in in Fig. 1 übertrieben herausgestellte Baugruppen gegliedert. Unmittelbar oberhalb der Fahrzeug Begrenzungsprofillinie 1 befinden sich ein in einem etwa zylindrischen Gehäuseabschnitt untergebrachter Elektromotor 5, der vorzugsweise als Scheibenläufer ausgebildet ist. An den Elektromotor 5 schließt sich einerseits in einem konisch gestalteten Gehäuseabschnitt eine Motorbremse 6 und andererseits, in einem im wesentlichen wieder zylindrischen Gehäuseabschnitt, ein vollständiger Getriebeteil 7 des Untersetzungsgetriebes an. Aus dem Gehäuseabschnitt für das Getriebeteil 7 springt seitlich ein kleiner Gehäuseabschnitt 8 vor, in welchem sich eine dem Getriebeteil 7 zugeordnete, elektrisch schaltbare Bremse befindet. Der Elektromotor 5, die Motorbremse 6 und das Getriebeteil 7 sind gleichachsig zueinander mit etwa waagrecht verlaufender Achse 10 angeordnet. An das Getriebeteil 7 schließt sich ein im wesentlichen nach aufwärts erstreckender Gehäuseteil 9 zur Aufnahme eines Zahnradgetriebes und eines Kurvengetriebes an; das Gehäuseteil 9 weist axial eine nur geringe Erstreckung auf. Das im Gehäuseteil 9 befindliche Zahnradgetriebe vermittelt eine Verbindung von der Achse 10 des Elektromotors 5, der Motorbremse 6 und des Getriebeteiles 7 zu einer zu dieser parallelen, jedoch vertikal über dieser befindlichen, zweiten Achse 11. In Höhe der Achse 11 schließt sich an das Gehäuseteil 9 einerseits das Gehäuse eines Gestängestellers 12 an, aus welchem das Ende eines Stößels 13 eines Betätigungsgliedes 13, 36 mit einem Anlenkauge 14 herausragen. Das Anlenkauge 14 befindet sich etwa im Bereich oberhalb des Elektromotors 5

3

bzw. der Motorbremse 6, der Gestängesteller 12 ist im wesentlichen oberhalb des Getriebeteiles 7 angeordnet. Andererseits schließt an das Gehäuseteil 9 ein im Querschnitt etwa rechteckiger Federspeicher 15 an, sein Gehäuse weist an gegenüberliegenden Stellen, oben und unten, vorspringende Lagerzapfen 16 auf. An den Federspeicher 15 sind lösbar das Gehäuse einer mechanischen Notlöseeinrichtung 17 und an diese anschließend ebenfalls lösbar eine Vorrichtung 18 angebaut; die Vorrichtung 18 dient der mechanischen Begrenzung der von der Betätigungseinrichtung 4 ausübbaren Betätigungskraft in Abhängigkeit von der Fahrzeugbelastung. Von der Vorrichtung 18 geht zum Einleiten eines der Fahrzeugbelastung entsprechenden Signals ein vorzugsweise als Bowdenzug 19 ausgebildetes Gestänge aus.

An das Anlenkauge 14 und an die Lagerzapfen 16 sind die Enden von lediglich in der Aufsicht auf die Betätigungseinrichtung 4 dargestellten Bremshebeln 20 angelenkt, welche einer im übrigen nicht dargestellten Bremszange für eine ebenfalls nicht gezeigte Scheibenbremse zugehören.

Aus Fig.1 ist ersichtlich, daß die Betätigungseinrichtung einen klar in Baugruppen gegliederten, trotzdem aber kompakten Aufbau aufweist, wobei die Bauform der Betätigungseinrichtung deren Unterbringung im insbesondere bei Schienenfahrzeugen besonders beschränkten, zur Verfügung stehenden Einbauraum ermöglicht.

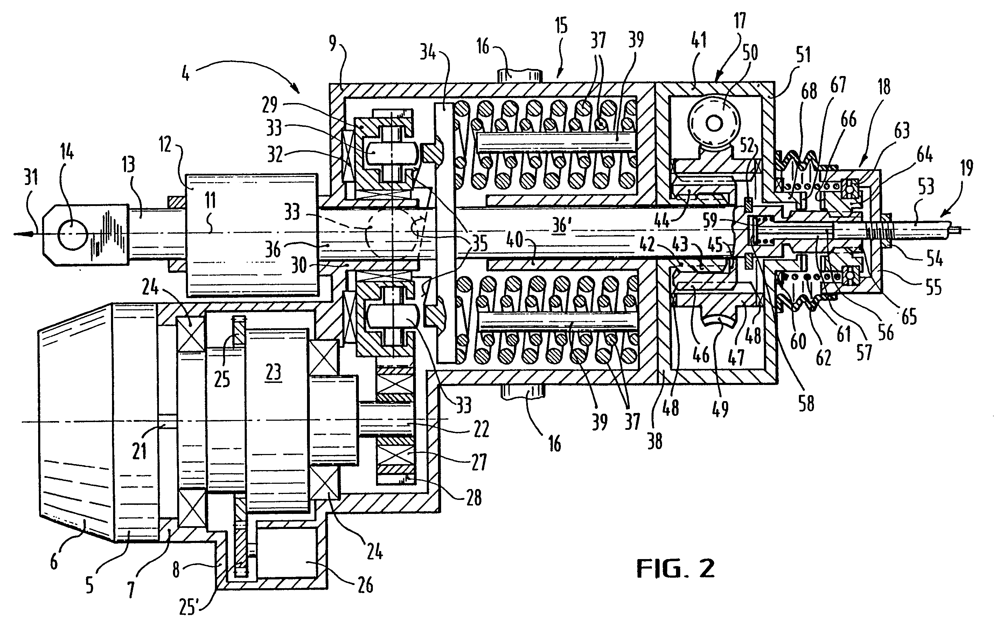

Die vorzugsweise als Scheiben- oder Kegelbremse ausgebildete Motorbremse 6 wirkt derart, daß sie bei Erregung des Elektromotors 5 löst und einen Lauf des Elektromotors 5 ermöglicht, ansonsten, bei nicht erregtem Elektromotor 5, geschlossen ist und den Läufer des Elektromotrs 5 in seiner jeweiligen Drehlage verriegelt. Der Elektromotor 5 und die Motorbremse 6 können auch baulich ineinander integriert sein, wie es bei vielen handelsüblichen Elektromotoren der Fall ist. Das Getriebeteil 7 ist gemäß Fig. 2 als Cycloiden- oder Planetengetriebe mit gleichachsigem An- und Abtrieb 21 bzw. 22 ausgebildet. Das Gehäuse 23 des Cycloiden- bzw. Planetengetriebes ist mittels Lagerungen 24 drehbar im Getriebeteil 7 gelagert, es trägt einen Zahnkranz 25, in welchem ein Ritzel 25' eingreift, das mittels einer elektrisch betätigbaren, gegebenenfalls mechanisch servounterstützten Bremse 26 bei elektrischer Erregung der Bremse 26 undrehbar festhaltbar ist. Das Ritzel 25' und die Bremse 26 befinden sich im Gehäuseabschnitt 8. Auf dem in das Gehäuseteil 9 ragenden Abtrieb 22 befindet sich unter Zwischenschaltung eines Freilaufes 27 ein Ritzel 28, welches mit dem im Durchmesser wesentlichen größeren Zahnkranz am Außenumfang eines Ringkörpers 29 kämmt und mit diesem ein Zahnradgetriebe 28, 29 bildet. Der Ringkörper 29 ist auf einem zur Achse 11 koaxialen Gehäuseansatz 30 drehbar gelagert und einerseits, in Richtung der durch einen Pfeil 31 in Fig. 2 symbolisierten, von der Betätigungseinrichtung abgebbaren Betätigungskraft über ein Achsiallager 32 axial gegen das Gehäuseteil 9 abgestützt. Im Ringkörper 29 sind mit zur Achse 11 radialer Achsrichtung vier Wälzkörper 33 drehbar gelagert. Dem Axiallager 32 abgewandt steht den Ringkörpern 29 ein scheibenartiges Teil 34 gegenüber, welches für jeden Wälzkörper 33 eine axial ansteigende Kurvenbahn 35 trägt; die Wälzkörper 33 vermögen auf den Kurvenbahnen 35 abzurollen und bestimmen durch ihre jeweilige Lage auf den Kurvenbahnen 35 den axialen Abstand zwischen Ringkörper 29 und scheibenartigem Teil 34. Der Ringkörper 29 mit dem Wälzkörper 33 und das Teil 34 mit den Kurvenbahnen 35 bilden somit ein Kurvengetriebe 33, 35, welches axial sehr flach ist. Selbstverständlich ist es möglich, anstelle von vier Wälzkörpern 33 und vier Kurvenbahnen 35 eine andere Anzahl, vorzugsweise jedoch wenigstens drei Wälzkörper und Kurvenbahnen um die Achse 11 gleichmäßig verteilt am Ringkörper 29 bzw. Teil 34 anzuordnen.

Das scheibenartige Teil 34 ist starr mit einem Stößel 36 des Betätigungsgliedes 13, 36 verbunden, der den Gehäuseansatz 30 und damit den Ringkörper 29 durchragt und in das Gehäuse des Gestängestellers 12 führt. Im Gestängesteller 12, welcher einen beliebigen, bekannten Aufbau aufweisen kann, ist der Stößel 36 längeneinstellbar mit dem Stößel 13 verbunden, welches mit dem in Fig. 2 um 90° gedreht dargestellten Anlenkauge 14 endet. Der Gestängesteller 12 stellt die relative Länge des Betätigungsgliedes 13, 36 in bekannter Weise selbsttätig so ein, daß die von der Betätigungseinrichtung 4 betätigbare Scheibenbremse im Lösezustand stets das vorgeschriebene Lüftspiel aufweist. Das Teil 34 weist quadratischen, also unrunden Umriß, angepaßt an den Federspeicher 15, auf und ist somit undrehbar, aber axial verschieblich am Gehäuse der Betätigungseinrichtung 4 geführt. An der den Kurvenbahnen 35 abgewandten Seite liegen am Teil 34 die Enden von Speicherfedern 37 an, welche sich im Federspeicher 15 befinden und sich andererseits an einer Gehäusewand 38 abstützen. Die Speicherfedern 37 sind zu vier Doppelpaketen zusammengefaßt, deren jedes durch einen an der Gehäusewand 38 gehaltenen und mit Abstand vor dem Teil 34 endenden Stift 39 geführt ist. Die Federpakete sind gleichmäßig verteilt um die Achse 11 angeordnet, zwischen die Federpakete und einem diese durchragenden, ebenfalls stößelartigen Abschnitt 36' des Stößels 36 greift eine Gehäusehülse 40 ein, welche an der Gehäusewand 38 befestigt ist und welche der Führung des Abschnittes 36' dient.

Die Gehäusewand 38 ist als Anflanschwand ausgebildet, an welche im in Fig. 2 dargestellten Ausführungsbeispiel das Gehäuse 41 der mechanischen Notlöseeinrichtung 17 angeflanscht ist. Das Gehäuse 41 ist vom Abschnitt 36′ des Stößels 36 durchragt; das Gehäuse 41 trägt von seiner der Gehäusewand 38 zugewandten Wandung ausgehend einen den Abschnitt 36′ umgebenden Zylinderansatz 42, der axial etwa die Hälfte des Gehäuses 41 durchragt und an seinem Außenumfang ein Gewinde 43 trägt. Mit dem Gewinde 43 ist eine Mutter 44 verschraubt, welche den Zylinderansatz 42 überragt und vor dessen der Gehäusewand 38 abgewandten Ende einen nach radial innen bis dicht vor den Abschnitt 36′ ragenden Ringflansch 45 trägt. Radial außen ist die Mutter 44 mittels einer Axialnutverzahnung 46 undrehbar, aber axial verschiblich mit einem Ringkörper 47 gekoppelt ist, welcher mittels Lagerungen 48 drehbar, aber axial unverschieblich im Gehäuse 41 gelagert ist. Der Ringkörper 47 trägt an seinem Außenumfang ein Schneckenrad 49, welches mit einer im Gehäuse 41 drehbar und axial unverschieblich gelagerten Schnecke 50 kämmt. Die Schnecke 50 ist von Hand, gegebenenfalls über ein nicht dargestellten Gestänge von einer gut zugänglichen Stelle aus antreibbar. Der Abschnitt 36′ trägt zwischem dem Ringflansch 45 und einer der Gehäusewand 38 abgewandten Wandung 51 des Gehäuses 41 einen nach radial außen ragenden Ringflansch 52, welcher als Sicherungsring ausgebildet sein kann. In der in Fig. 2 dargestellten, mittleren Hubstellung der Betätigungseinrichtung 4 befindet sich der Ringflansch 52 in einer mittleren Lage zwischen dem Ringflansch 45 und der Wandung 51 mit Abstand zu beiden.

Der Gehäusewand 38 abgewandt schließt sich an das Gehäuse 41 die Vorrichtung 18 an, welche dem fahrzeuglastabhängigen, mechanischen Begrenzen der von der Betätigungseinrichtung 4 abgebbaren Betätigungskraft dient. Der Mantel 53 des Bowdenzuges 19 ist mittels einer Mutter 54 einstellbar an einem Gehäuseteil 55 abgestützt, während die Seele 56 des Bowdenzuges 19 in eine auch das Ende des Mantels 53 verschieblich aufnehmende Ausnehmung 57 des Abschnittes 36′ des Stößels 36 ragt und mit einer Kopfplatte 58 in der Ausnehmung 57 endet. Zwischen der Kopfplatte 58 und einer Axialschulter in der Ausnehmung 57 ist eine Feder 59 eingespannt, welche die Kopfplatte 58 in Richtung zum Boden der Ausnehmung 57 belastet. Das Gehäuseteil 55 ist mittels einer sich über ein Axiallager 60 gegen die Wandung 51 abstützenden Feder 61 von der Wandung 51 abgespreizt. Ein die Feder 61 überdeckender Faltenbalg 62 verbindet das Gehäuseteil 55 beweglich und gegen Verschmutzungen des Gehäuseinnenraumes abdichtend mit der Wandung 51. Im Gehäuseteil 55 ist über eine Lagerung 63 drehbar eine Mutter 64 gelagert, welche über ein nichtselbsthemmendes Gewinde mit einem Gewindefortsatz 65 des Abschnittes 36′ verschraubt ist. Der Wandung 51 zugewandt trägt die Mutter 64 eine axiale Verzahnung 66, welcher mit axialem Abstand eine entsprechende Axialverzahnung 67 an einem zylindrischen, den Abschnitt 36′ umgebenden Ansatz 68 der Wandung 51 gegenübersteht.

In einem mittleren Hubbereich und damit bei Abgabe einer mittleren Betätigungskraft nehmen die Teile der Betätigungseinrichtung 4 die aus Fig.2 ersichtlichen Lagen ein. Die Wälzkörper 33 befinden sich auf einem mittleren Abschnitt der Kurvenbahnen 35 und werden in dieser Lage durch drehfeste Halterung des Ringkörpers 29 vermittels des Ritzels 28, des unter der anstehenden Belastung sperrenden Freilaufes 27 und des Getriebeteiles 7 einerseits durch Drehsperren dessen Gehäuses 23 vermittels der Bremse 26 und andererseits durch Drehsperren des Antriebes 21 vermittels der Motorbremse 6 festgehalten. Die Speicherfedern 37 drücken über das Teil 34 die Kurvenbahnen 35 an die Wälzkörper 33 an und halten über den Stößel 36, den Gestängesteller 12 und das Betätigungsglied 13, 36 die am Anlenkauge 14 angelenkte Bremse unter deren elastischer Verformung mit einer bestimmten Betätigungskraft gespannt. Die Mutter 44 befindet sich am der Gehäusewand 38 zugewandten Ende auf dem Gewinde 43, und die Axialverzahnungen 66, 67 weisen einen bestimmten, der Fahrzeugbelastung proportionalen Axialabstand voneinander auf. In diesem Zustand ist nur die Bremse 26 zu ihrem Geschlossenhalten elektrisch erregt.

Zum Lösen wird der Elektromotor 5 elektrisch erregt, wobei sich bei Erreichen einer bestimmten Erregungsstärke die Motorbremse 6 löst und der Elektromotor 5 über das Getriebeteil 7, den weiterhin sperrenden Freilauf 27 und das Zahnradgetriebe 28, 29 den Ringkorper 29 zu drehen beginnt, derart, daß die Wälzkörper 33 weiter auf die Kurvenbahnen 35 auflaufen, das Teil 34 also vom Ringkörper 29 unter Spannen der Speicherfeder 37 weiter weggedrückt wird. Dabei nähert sich der Ringflansch 52 an die Wandung 51 an, ohne an dieser Wandung 51 anzuschlagen, und der Abstand zwischen den Axialverzahnungen 66 und 67 vergrößert sich. Zugleich wird über das Betätigungsglied 13, 36 das Anlenkauge 14 gemäß Fig. 2 nach rechts bewegt, wodurch die Bremse gelöst wird. Sobald die Wälzkörper 33 den Endbereich der Kurvenbahnen erreichen, ist der Lösevorgang beendet und über nicht dargestellte Mikroschalter wird der Elektromotor 5 wieder abgeschaltet, wobei die Motorbremse 6 einfällt und die Betätigungseinrichtung 4 in der erreichten Lösestellung verriegelt. Die Bremse 26 bleibt während dieses Vorganges erregt und geschlossen.

Soll, ausgehend von der zuvor beschriebenen, mittleren Stellung die Bremsung verstärkt werden, so wird der Elektromotor 5 ebenfalls entsprechend der mittleren Stellung erregt, wobei sich die Motorbremse 6 löst. Sodann wird die Erregung des Elektromotors 5 vermindert, wobei er sich unter der Entspannkraft der Speicherfedern 37, welche über das nicht selbsthemmende Getriebe als Drehmoment auf ihn einwirkt, entgegengesetzt zum Lösevorgang zu drehen beginnt, derart, daß unter entsprechender Drehung des Ringkörpers 39 die Wälzkörper 33 auf den Kurvenbahnen 35 unter Annäherung des Teiles 34 an den Ringkörper 29 ablaufen. Das Anlenkauge 14 wird dabei gemäß Fig. 2 weiter nach links verschoben, wodurch unter der Kraft der Speicherfeder 37 die Bremse unter elastischer Verformung fester zugespannt wird. Die der jeweiligen Fahrzeugbelastung entsprechende, maximale Bremsbetätigung ist dann erreicht, wenn die Mutter 64 gegen den Ansatz 68 unter Ineinandergreifen der Axialverzahnungen 66 und 67 anschlägt und eine weitere Linksverschiebung des Abschnittes 36' und damit des Stößels 36 hindert. Der Ringflansch 52 nähert sich dabei dem Ringflansch 45 an, ohne an diesem anzuschlagen. Um während dieses Zuspannvorganges einen sicheren Lauf des Elektromotors 5 ohne Verbrauch eines Kraftanteiles der Speicherfeder 37 sicherzustellen, kann die Erregung des Elektromotors 5 auch umgepolt werden, so daß er durch Eigenantrieb in der entsprechenden Drehrichtung läuft.

Das nachfolgende Bremsenlösen erfolgt wie bereits vorstehend beschrieben.

Zum Notbremsen wird, ausgehend von der Lösestellung oder einer mittleren Teilbremsstellung, die Bremse 26 durch Entregen gelöst, woraufhin sich die Speicherfedern 37 unter Linksbewegen des Stößels 36 und damit des Anlenkauges 14 schnell bis zur fahrzeuglastabhängig vermittels der Mutter 64 eingestellten Hubbegrenzung entspannen. Über das Zahnradgetriebe 28, 29 wird dabei bei festgehaltenem Antrieb 21 auf das Gehäuse 23 ein Drehmoment ausgeübt, so daß das Gehäuse 23 zu rotieren beginnt. Ein besonderer Vorteil ist hierbei, daß nur die gegenüber dem Elektromotor 5 wesentlich geringere Trägheitsmoment des Gehäuses 23 mit relativ niedriger Übersetzung angetrieben werden muß, der Einbremsvorgang also sehr rasch erfolgen kann. Nach Erreichen der vollen Einbremsung kann das Gehäuse 23 unter Lösen des Freilaufes 27 auslaufen, die rasche Hubbeendigung führt also zu keiner stoßartigen, hohen Belastung des Zahnradgetriebes 28, 29 durch das Schwungmoment des Gehäuses 23. Nach Wiedererregen und Schließen der Bremse 26 kann die Betätigungseinrichtung 4 durch entsprechendes Erregen des Elektromotors 5 in die Lösestellung zurückgeführt werden.

Zum mechanischen Lösen aus Betriebs- oder Notbremssituationen oder auch bei beschädigtem, blockierten Stellantrieb wird vermittels der Schnecke 50 der Ringkörper 47 und damit über die Axialnutverzahnung 46 die Mutter 44 derart gedreht, daß sich die Mutter 44 auf dem Zylinderabsatz 42 gemäß Fig. 2 nach rechts verschraubt, mit ihrem Ringflansch 45 am Ringflansch 52 zur Anlage gelangt und diesen nach rechts drückt, wobei unter Spannen der Speicherfeder 37 der Stößel 36 und damit das Anlenkauge 14 nach rechts gezogen werden. Sobald das mechanische Lösen nicht mehr benötigt wird, ist durch umgekehrtes Drehen die Mutter 44 in ihre Ausgangslage zurückzuschrauben, wobei, falls zwischenzeitlich die Betätigungseinrichtung 4 nicht durch Erregen des Elektromotors 5 in ihre Lösestellung gebracht wurde, ein erneutes Einbremsen erfolgt.

Bei Fahrzeugbelastungsänderungen ändert sich der Abstand der Kopfplattte 58 zum am Mantel 53 gehaltenen Gehäuseteil 55, womit auch der Abstand zwischen den Gehäuseteil 55 und dem Ansatz 68 geändert wird. Die Mutter 64 folgt dabei unter Verschrauben auf dem Gewindefortsatz 65 der Lageänderung des Gehäuseteiles 55, wodurch der Axialabstand zwischen den Axialverzahnungen 66 und 67 fahrzeuglastabhängig justiert wird. Während der bei den vorstehend beschriebenen Bremsvorgängen auftretenden Linksverschiebung des Abschnittes 36' wird über die Feder 59 und die Kopfplatte 58 die Seele 56 des Bowdenzuges 19 und damit bei konstanter Fahrzeugbelastung auch der Bowdenzugmantel 53 mitgenommen, wodurch das Gehäuseteil 55 unter Kompression der Feder 61 dem Ansatz 68 angenähert wird. Über die Lagerung 63 wird dabei auch die Mutter 64 entsprechend der Linksverschiebung des Abschnittes 36' mitgenommen, die nichtselbsthemmende Verschraubung der Mutter 64 auf dem Gewindefortsatz 65 führt hierbei also zu keiner Lageänderung der Mutter 64 auf dem Gewindefortsatz 65. Bei Anschlagen der Mutter 64 am Ansatz 68 hindern die ineinander eingreifenden Axialverzahnungen 66 und 67 ein gewaltsames Drehen und damit Verschrauben der Mutter 64 auf dem Gewindefortsatz 65, so daß kein ungewolltes Verstellen der fahrzeuglastabhängigen Hubbegrenzung erfolgen kann.

Der Gestängesteller 12 kann beliebige Bauarten aufweisen, es ist lediglich wesentlich, daß dieser Gestängesteller in der Lösestellung einen bestimmten Lösehub der Bremse konstant hält. Anstelle der Bremse 26 kann in die Drehverbindung vom Ringkörper 29 zum Elektromotor 5 an beliebiger, zweckmäßig jedoch dem Ringkorper 29 naheliegender Stelle eine elektrisch schaltbare Trennkupplung eingebaut werden, welche bei elektrischer Erregung geschlossen, im unerregten Zustand geöffnet ist. Die Funktion bei Notbremsungen oder auch bei durch Stromausfall bedingter Entregung ist dabei wie vorstehend zu Notbremsungen beschrieben. Anstelle der Notlöseeinrichtung 17 kann eine mechanische Notlöseeinrichtung beliebiger Bauart vorgesehen werden, zweckmäßig ist es, eine sich selbsttätig rückstellende Notlöseeinrichtung vorzusehen, wie sie für Federspeicherbremszylinder in vielen Bauarten bekannt sind und welche bei ihrer Betätigung zumeist ein axiales Verstellen oder Entkuppeln des dem Kolben von Federspeicherbremszylindern vergleichbaren Teiles 34 relativ zum Stößel 36 bewirken.

Um eine bestimmte Elastizität der Bremse, also beispielsweise der Bremshebel 20 gemäß Fig. I, durch Simulation sicherzustellen und damit die Zuordnung bestimmter Betätigungskräfte zu bestimmen Hubstellungen zu verbessern, kann es zweckmäßig sein, in den Stößel 36 zwischen dem Teil 34 und dem Gestängesteller 12 einen vorgespannten Federpuffer einzuordnen, welcher von der Betätigungskraft in Kompressionsrichtung belastet wird. Ein derartiger Federpuffer ist aus der eingangs erwähnten DE-Patentanmeldung B 422 II/20 f in Aufbau und Funktionsweise bekannt und braucht daher hier nicht weiter beschrieben zu werden. Durch die spezielle Einordnung in den Stößel 36 beeinflußt der Federpuffer die Funktionsweise des im Gestängestellers 12 nicht. Es ist jedoch auch möglich, den Federpuffer in den Stößel 13 einzuordnen.

Kurzfassung:

Die elektromechanische Betätigungseinrichtung 4 weist einen durch einen Elektromotor 5 über ein Untersetzungsgetriebe 8; 28, 29 und ein axial flaches Kurvengetriebe 33, 35 spannbaren Federspeicher 15 auf, der Federspeicher 15 wirkt über einen Gestängesteller 12 und ein Betätigungsglied 13, 36 auf eine Fahrzeug-Scheibenbremse. In den Drehantrieb zwischen dem Kurvengetriebe 33, 35 und den Elektromotor 5 ist eine elektrisch schaltbare Kupplung eingeordnet, welche, falls wenigstens ein Getriebeteil 7 als Cycloiden- oder Planetengetriebe ausgebildet ist, als elektrisch schaltbare Bremse 26 für ein drehbares Gehäuse 23 des Getriebeteiles 7 ausgebildet ist. Weiterhin kann in das Untersetzungsgetriebe ein Freilauf 27 integriert sein. Das Betätigungslied 13, 36 der Gestängesteller 12 und der Federspeicher 15 mit an diesen anbaubaren Zusatzgeräten, wie beispielsweise eine Notlöseeinrichtung 17 und eine Vorrichtung 18 zum fahrzeuglastabhängigen, mechanischen Begrenzen der abgebbaren Betätigungskraft, sind zueinander gleichachsig angeordnet, während der Elektromotor 5, eine diesem zugeordnete Motorbremse 6 und ein Getriebeteil 7 ebenfalls zueinander gleichachsig mit zu den vorgenannten Teilen paralleler Achsrichtung unterhalb der vorgenannten Teile angeordnet sind. Hierdurch wird eine optimale Ausnutzung des bei Fahrzeugen zur Verfügung stehenden Einbauraumes ermöglicht.

**Bezugszeichenliste**

| | |
|---|---|
| 1 | Fahrzeug-Begrenzungsprofillinie |
| 2 | Abstand |
| 3 | Schienenoberkante |
| 4 | Betätigungseinrichtung |
| 5 | Elektromotor |
| 6 | Motorbremse |
| 7 | Getriebeteil |
| 8 | Gehäuseabschnitt |
| 9 | Gehäuseteil |
| 10 | Achse |
| 11 | Achse |
| 12 | Gestängesteller |
| 13 | Stößel |
| 14 | Anlenkauge |
| 15 | Federspeicher |
| 16 | Lagerzapfen |
| 17 | Notlöseeinrichtung |
| 18 | Vorrichtung |
| 19 | Bowdenzug |
| 20 | Bremshebel |
| 21 | Antrieb |
| 22 | Abtrieb |
| 23 | Gehäuse |
| 24 | Axiallager |
| 25 | Zahnkranz |
| 25' | Ritzel |
| 26 | Bremse |
| 27 | Freilauf |
| 28 | Ritzel |
| 29 | Ringkörper |
| 28, 29 | Zahnradgetriebe |
| 30 | Gehäuseansatz |
| 31 | Pfeil |
| 32 | Axiallager |
| 33 | Wälzkörper |
| 34 | Teil |
| 35 | Kurvenbahn |
| 33, 35 | Kurvengetriebe |
| 36 | Stößel |
| 36' | Abschnitt |
| 13, 36 | Betätigungsglied |
| 37 | Speicherfeder |
| 38 | Gehäusewand |
| 39 | Stift |
| 40 | Gehäusehülse |
| 41 | Gehäuse |
| 42 | Zylinderansatz |
| 43 | Gewinde |
| 44 | Mutter |
| 45 | Ringflansch |
| 46 | Axialnutzverzahnung |
| 47 | Ringkörper |
| 48 | Lagerung |
| 49 | Schneckenrad |
| 50 | Schnecke |
| 51 | Wandung |
| 52 | Ringflansch |
| 53 | Mantel |
| 54 | Mutter |
| 55 | Gehäuseteil |
| 56 | Seele |
| 57 | Ausnehmung |
| 58 | Kopfplatte |
| 59 | Feder |
| 60 | Axiallager |
| 61 | Feder |
| 62 | Faltenbalg |
| 63 | Lagerung |
| 64 | Mutter |
| 65 | Gewindefortsatz |
| 66 | Axialverzahnung |
| 67 | Axialverzahnung |
| 68 | Ansatz |

## Patentansprüche

1. Elektromechanische Betätigungseinrichtung (4) für eine Scheibenbremse von Fahrzeugen, insbesondere Schienenfahrzeugen, mit einem die Zuspannkraft abgebenden Federspeicher (15), dessen längsverschieblich geführtes Betätigungsglied (13, 36) vermittels eines über einen Elektromotor (5) verstellbaren, nichtselbsthemmenden Kurvengetriebes (33, 35) in Spannrichtung des Federspeichers (15) bewegbar und in einstellbaren Sollagen haltbar ist, wobei zwischen den Elektromotor (5) und das Kurvengetriebe (33, 35) ein Cycloiden- oder Planetengetriebe (7) eingeordnet ist, dadurch gekennzeichnet, daß als zwischen dem Elektromotor (5) und dem Kurvengetriebe (33, 35) wirksame, bei Notbetätigung der Betätigungseinrichtung (4) öffnende und die Drehmomentübertragung zwischen Elektromotor (5) und Kurvengetriebe (33, 35) unterbrechende Kupplungseinrichtung eine bei elektrischer Erregung schließende, gegebenenfalls mechanische Servowirkung aufweisende Bremse (26) zum Festbremsen eines drehbar gelagerten Gehäuses (23) des Cycloiden- oder Planetengetriebes (7) vorgesehen ist.

2. Elektromechanische Betätigungseinrichtung nach Anspruch 1, dadurch gekennzeichnet, daß dem Cycloiden- oder Planetengetriebe (7) mit hohem Untersetzungsfaktor (8) ein Zahnradgetriebe (28, 29) mit niedrigem Untersetzungsfaktor in Richtung zum Kurvengetriebe (33, 35) nachgeschaltet ist.

3. Elektromechanische Betätigungseinrichtung nach Anspruch 1, dadurch gekennzeichnet, daß eine gegebenenfalls mit dem Elektromotor (5) kombinierte Motorbremse (6) vorgesehen ist, welche bei unerregtem Elektromotor (5) eingebremst ist.

4. Elektromechanische Betätigungseinrichtung nach Anspruch 1, dadurch gekennzeichnet, daß in die Drehmomentverbindung von der Kupplungseinrichtung zum Kurvengetriebe (33, 35) ein in Drehrichtung zum Spannen des Federspeichers (15) sperrender Freilauf (27) eingeordnet ist.

5. Elektromechanische Betätigungseinrichtung nach Anspruch 4, dadurch gekennzeichnet, daß der Freilauf (27) in das Zahnradgetriebe (28, 29) integriert ist.

6. Elektromechanische Betätgigungseinrichtung nach einem oder mehreren der vorstehenden Ansprüche, dadurch gekennzeichnet, daß das Kurvengetriebe (33, 35) einen einen stößelartigen Abschnitt (36) des Betätigungsgliedes (13, 36) umgebenden, drehbar und axial zumindest in Entspannrichtung des Federspeichers (15) unverschieblich gelagerten Ringkörper (29) aufweist, der vom Elektromotor (5) antreibbar ist und der gleichmäßig verteilt wenigstens drei Wälzkörper (33) mit zum Ringkörper (29) jeweils radialer Achsrichtung trägt, welche mit axial gerichteten Kurvenbahnen (35) an einem anderseits von der

Speicherfeder (37) des Federspeichers (15) belasteten, scheibenartigen Teil (34) zusammenwirken.

7. Elektromechanische Betätigungseinrichtung nach den Ansprüchen 1 bis 6, dadurch gekennzeichnet, daß der Federspeicher (15), das Kurvengetriebe (33, 35) und das mit einem Gestängesteller (12) ausgestattete Betätigungsglied (13, 36) gleichachsig und parallel und hierzu der Elektromotor (5), die Motorbremse (6), und das Cycloiden- oder Planetengetriebe (7) ebenfalls gleichachsig nach unten versetzt angeordnet sind, wobei das Kurvengetriebe (33, 35) zwischen dem Federspeicher (15) und dem Gestängesteller (12) angeordnet ist und wobei der Federspeicher (15) eine in vier gleichmäßig um seine Achse verteilt angeordnete Federpakete aufgeteilte Speicherfeder (37) in einem in Stirnansicht etwa quadratischen Gehäuse aufweist und dem Kurvengetriebe (33, 35) abgewandt mit einer Gehäusewand (38) endet, an welche wahlweise eine mechanische Löseeinrichtung (17) und/oder eine mechanische, fahrzeuglastabhängig verstellbare Begrenzungsvorrichtung (18) für die Zuspannkraft anbaubar sind.

8. Elektromechanische Betätigungseinrichtung nach einem oder mehreren der vorstehenden Ansprüche, dadurch gekennzeichnet, daß in das Betätigungsglied (13, 36) ein vorgespannter Federpuffer eingeordnet ist.

## Claims

1. Electromechanical actuator (4) for a disc brake for vehicles, in particular railway vehicles, with a spring-loaded unit (15) supplying the clamping power, the actuating member (13, 36) of which is displaceably guided longitudinally, is movable in the direction of loading of the spring-loaded unit (15) and can be held in variable set positions by a nonself-locking cam gear (33, 35), which is adjustable via an electric motor (5), with a cycloidal or planetary gear (7) being positioned between the electric motor (5) and the cam gear (33, 35), characterised in that a brake (26), closing on an electrical signal, with mechanical servo assistance if necessary, is provided for firmly braking a rotatably mounted housing (23) of the cycloidal or planetary gear (7), so as to act as a coupling device between the electric motor (5) and the cam gear (33, 35), opening on emergency operation of the actuator (4) and interrupting the torque transmission between electric motor (5) and cam gear (33, 35).

2. Electromechanical actuator according to claim 1, characterised in that a toothed gear (28, 29) with low reduction ratio is connected after the cycloidal or planetary gear (7) with a high reduction ratio (8), in the direction towards the cam gear (33, 35).

3. Electromechanical actuator according to claim 1, characterised in that a motor brake (6) is provided, possibly combined with the electric motor (5), so that it is braked when the electric motor (5) is not activated.

4. Electromechanical actuator according to claim 1, characterised in that a free-wheel means (27), blocking in the direction of rotation which loads the spring-loaded unit (15), is positioned in the torque connection from the coupling device to the cam gear (33, 35).

5. Electromechanical actuator according to claim 4, characterised in that the free-wheel means (27) is integrated into the toothed gear (28, 29).

6. Electromechanical actuator according to one or more of the above claims, characterised in that the cam gear (33, 35) has an annular body (29) surrounding, a rod-like section (36) of the actuating member (13, 36), carried rotationally and axially immovably at least in the direction of relaxation of the spring-loaded unit (15), which annular body can be driven by the electric motor (5) and which carries, distributed evenly, at least three rolling bodies (33), each of whose axes is radially oriented to the annular body (29), which co-operate with axially oriented curved paths (35) on a disc-like part (34), loaded on the other side by the storage spring (37) of the spring-loaded unit (15).

7. Electromechanical actuator according to claims 1 to 6, characterised in that the spring-loaded unit (15), the cam gear (33, 35) and the actuating member (13, 36) equipped with a rod regulator (12) are arranged on the same axis, and parallel to it the electric motor (5), the motor brake (6) and the cycloidal or planetary gear (7) are likewise mounted on a common axis, offset downwards, the cam gear (33, 35) being arranged between the spring-loaded unit (15) and the rod regulator (12), and the spring-loaded unit (15) having a storage spring means (37) which is divided into four spring portions arranged evenly around its axis, in a housing which is approximately square in frontal view and ends facing away from the cam gear (33, 35) with a housing wall (38), on which optionally a mechanical release device (17) and/or a mechanical limiting arrangement (18) for the tensioning force, which is adjustable according to vehicle load, can be constructed.

8. Electromechanical actuator according to one or more of the above claims, characterised in that a pre-stressed spring buffer is positioned in the actuating member (13, 36).

**Revendications**

1. Dispositif de commande électromécanique (4) pour un frein à disque de véhicules, en particulier pour des véhicules sur rails, avec un ressort accumulateur (15) fournissant la force de serrage et dont l'organe de manoeuvre (13, 16), guidé à coulissement longitudinal est susceptible d'être déplacé, à l'aide d'une transmission à cames (33, 35) déplaçable à l'aide d'un moteur électrique (15), dans le sens de l'armement du ressort accumulateur (15), et d'être maintenu dans des positions de consigne réglables, une transmission cycloïdale ou planétaire (7) étant disposée entre le moteur électrique (5) et la transmission à cames (33, 35), caractérisé par le fait qu'il est prévu, comme dispositif d'accouplement agissant entre le moteur électrique (5) et la transmission à cames (33, 35), se dégageant lors d'une manoeuvre d'urgence du dispositif de commande (4) et interrompant la transmission d'un couple entre le moteur électrique (5) et la transmission à cames (33, 35), un frein (26) qui se ferme lors d'une excitation électrique et qui présente éventuellement un effet d'asservissement, en vue de bloquer un carter (23), monté à rotation, de la transmission cycloïdale ou planétaire (7).

2. Dispositif de commande électromécanique selon la revendication 1, caractérisé par le fait qu'en aval et vers la transmission à cames, de la transmission cycloïdale ou planétaire (7) à facteur de démultiplication (8) élevé, est prévue une transmission par engrenages (28, 29) à faible facteur de démultiplication.

3. Dispositif de commande électromécanique selon la revendication 1, caractérisé par le fait qu'il est prévu un frein moteur (6), éventuellement combiné avec le moteur électrique (5), lequel frein moteur est serré lorsque le moteur électrique (5) n'est pas excité.

4. Dispositif de commande électromécanique selon la revendication 1, caractérisé par le fait que dans la liaison pour la transmission du couple du dispositif d'accouplement vers la transmission à cames (33, 35), est disposée une roue-libre (27) qui est bloquée dans le sens de rotation conduisant à l'armement du ressort accumulateur (15).

5. Dispositif de commande électromécanique selon la revendication 4, caractérisé par le fait que la roue-libre (27) est intégrée dans la transmission à engrenages (28, 29).

6. Dispositif de commande électromécanique selon une ou plusieurs des revendications précédentes, caractérisé par le fait que la transmission à cames (33, 35) comporte un corps annulaire (29) qui est monté de façon à pouvoir tourner sans pouvoir coulisser axialement, au moins dans le sens de la détente du ressort accumulateur (15), et qui entoure une section (36), en forme de poussoir, de l'organe de manoeuvre (13, 36), lequel corps annulaire est susceptible d'être entraîné par le moteur électrique (5) et qui porte, avec répartition uniforme, au moins trois corps de roulement (33) à direction axiale qui est radiale par rapport au corps annulaire (29), ledit corps de roulement coagissant avec des pistes à cames (35) dirigées axialement d'un élément en forme de disque (34) qui est chargé, par ailleurs, par le ressort (37) du ressort accumulateur (15).

7. Dispositif de commande électromécanique selon les revendications 1 à 6, caractérisé par le fait que le ressort accumulateur (15), la transmission à cames (33, 35) et l'organe de manoeuvre (13, 36) qui est pourvu d'un régleur automatique de la tringlerie (12) sont disposés coaxialement, et en parallèle à cet agencement, et avec décalage vers le bas, le moteur électrique (5), le frein-monteur (6) et les transmissions cycloïdales ou planétaires (7), sont également agencés de façon coaxiale, étant noté que la transmission à cames (33, 35) est disposée entre le ressort accumulateur (15) et le régleur automatique de la tringlerie (12), alors que le ressort accumulateur (15) comporte un ressort accumulateur (37) subdivisé en quatre paquets de ressorts disposés uniformément autour de son axe et disposé dans un carter sensiblement carré, en vue frontale, en se terminant, du côté éloigné de la transmission à cames (33, 35), avec une paroi de carter sur laquelle sont susceptibles d'être montés, au choix, un dispositif de desserrage mécanique (17) et/ou un dispositif mécanique de limitation pour la force de serrage, lequel dispositif est réglable et dépend de la charge du véhicule.

8. Dispositif de commande électromécanique selon une ou plusieurs des revendications précédentes, caractérisé par le fait qu'un tampon à ressort fermé est disposé dans l'organe de manoeuvre (13, 36).

FIG. 1a

FIG. 1b

FIG. 1c

FIG. 2